# EUROPÄISCHE PATENTSCHRIFT

(11) **EP 3 694 759 B1**
(45) Veröffentlichungstag und Bekanntmachung des Hinweises auf die Patenterteilung: **17.11.2021**
(21) Anmeldenummer: 18785870.9
(22) Anmeldetag: 28.09.2018
(51) Int. Cl.: B60W 50/023, B60T 8/88

(54) **KONTROLLSYSTEM FÜR EIN KRAFTFAHRZEUG, KRAFTFAHRZEUG, VERFAHREN ZUR KONTROLLE EINES KRAFTFAHRZEUGS, COMPUTERPROGRAMMPRODUKT UND COMPUTERLESBARES MEDIUM**
CONTROL SYSTEM FOR A MOTOR VEHICLE, MOTOR VEHICLE, METHOD FOR CONTROLLING A MOTOR VEHICLE, COMPUTER PROGRAM PRODUCT AND COMPUTER-READABLE MEDIUM
SYSTÈME DE COMMANDE POUR VÉHICULE AUTOMOBILE, VÉHICULE AUTOMOBILE, PROCÉDÉ DE COMMANDE D'UN VÉHICULE AUTOMOBILE, PRODUIT PROGRAMME INFORMATIQUE ET SUPPORT LISIBLE PAR ORDINATEUR

(30) Priorität: 12.10.2017 DE 102017218271
(43) Veröffentlichungstag der Anmeldung: 19.08.2020
(73) Patentinhaber: HELLA GmbH & Co. KGaA, 59552 Lippstadt (DE)
(72) Erfinder: DECIUS, Nikolaus, 59558 Lippstadt (DE); KÖHLER, Ulrich, 59556 Lippstadt (DE); KÜGELER, Carsten, 59557 Lippstadt (DE); ORLOV, Sergey, 33104 Paderborn (DE); GEBERT, Jürgen, 85368 Moosburg (DE); GRABS, Peter, 97084 Würzburg (DE); KORTE, Matthias, 97084 Würzburg (DE); BLOTT, Josua, 76135 Karlsruhe (DE); CLAUS, Michael, 34613 Schwalmstadt-Rörshain (DE); LERCH, Heiko, 76761 Rülzheim (DE); LUDOLPH, Sebastian, 35094 Lahntal (DE); OTT, Martin, 71394 Kernen im Remstal (DE); SURMUND, Sebastian, 61449 Steinbach (Taunus) (DE); VOLLMER, Pascal, 76137 Karlsruhe (DE); ZILLGEN, Martin, 53639 Königswinter (DE); HILLENKÖTTER, Sven, 97508 Untereuerheim (DE); HOPF, Martin, 96129 Strullendorf (DE); ÖCHSNER, Joachim, 97234 Reichenberg (DE)
(86) Internationale Anmeldenummer: PCT/EP2018/076455
(87) Internationale Veröffentlichungsnummer: WO 2019/072592

(56) Entgegenhaltungen:
- EP-A1- 2 765 045
- WO-A1-2011/032586
- DE-A1- 10 112 514
- DE-A1-102006 062 300
- DE-A1-102015 214 521
- US-A1- 2007 005 203

## Beschreibung

Die vorliegende Erfindung bezieht sich auf ein Kontrollsystem für ein Kraftfahrzeug nach dem Oberbegriff des Anspruchs 1, ein Kraftfahrzeug nach dem Oberbegriff des Anspruchs 6, ein Verfahren zur Kontrolle eines Kraftfahrzeugs nach dem Oberbegriff des Anspruchs 7, ein Computerprogrammprodukt und ein computerlesbares Medium. Derartige Kontrollsysteme für Kraftfahrzeuge, Kraftfahrzeuge, Verfahren zur Kontrolle von Kraftfahrzeugen, Computerprogrammprodukte und computerlesbare Medien sind aus dem Stand der Technik in zahlreichen Ausführungsvarianten bereits bekannt. Beispielsweise ist aus der Maschinenübersetzung der FR 2 843 341 B1 ins Englische ein Kontrollsystem für ein Kraftfahrzeug bekannt, umfassend ein erstes als Bremssteuergerät ausgebildetes Steuergerät zur Kontrolle einer als Bremsfunktion ausgebildeten ersten Funktion des Kraftfahrzeugs, ein zweites als Lenksteuergerät ausgebildetes Steuergerät zur Kontrolle einer als Lenkfunktion ausgebildeten zweiten Funktion des Kraftfahrzeugs und ein als Zentralsteuergerät ausgebildetes Reservesteuergerät, wobei das Bremssteuergerät und das Lenksteuergerät jeweils mit mindestens einem Sensor und/oder mindestens einem Aktor signalübertragend verbunden sind und wobei das Bremssteuergerät mit dem Zentralsteuergerät signalübertragend verbunden ist. Im Fehlerfall des Bremssteuergeräts wird eine Notbremsung von dem Zentralsteuergerät eingeleitet und kontrolliert.

Weitere Beispiele von redundant ausgeführten Kontrollsystemen für Kraftfahrzeuge sind aus der US 2007/005203 A1, DE 10 2006 062300 A1, WO 2011 /032586 A1, DE 10 2015 214521 A1, EP 2 765 045 A1 und DE 101 12 514 A1 bekannt.

Hier setzt die vorliegende Erfindung an.

Der vorliegenden Erfindung liegt die Aufgabe zugrunde, die ordnungsgemäße Ausführung von mittels Steuergeräten kontrollierter Funktionen eines Kraftfahrzeugs auch bei einem fehlerhaften Steuergerät mit möglichst geringem Zusatzaufwand zu gewährleisten.

Diese Aufgabe wird durch ein Kontrollsystem mit den Merkmalen des Anspruchs 1, ein Kraftfahrzeug mit den Merkmalen des Anspruchs 6, ein Verfahren mit den Merkmalen des Anspruchs 7, ein Computerprogrammprodukt mit den Merkmalen des Anspruchs 11 und ein computerlesbares Medium mit den Merkmalen des Anspruchs 12 gelöst. Die Unteransprüche betreffen vorteilhafte Weiterbildungen der Erfindung.

Ein wesentlicher Vorteil der Erfindung liegt insbesondere darin, dass voneinander verschiedene und mittels Steuergeräten kontrollierte Funktionen eines Kraftfahrzeugs auch im Fehlerfall eines der Steuergeräte mit einem möglichst geringen Mehraufwand sicher weiter ausgeführt werden. Dabei werden mindestens zwei voneinander verschiedene und jeweils durch ein Steuergerät kontrollierte Funktionen des Kraftfahrzeugs im Fehlerfall eines der beiden Steuergeräte weiter ausgeführt, ohne dass für beide Steuergeräte ein Reservesteuergerät oder dergleichen vorgehalten werden müsste. Entsprechend ist es möglich, Bauraum und Gewicht einzusparen sowie die Kosten zu reduzieren. Gerade bei modernen Kraftfahrzeugen mit einem hohen Grad an elektrisch und elektronisch ausgebildeter Funktionalität, also einer Vielzahl von mittels Steuergeräten kontrollierten Funktionen, ist dies sehr wichtig.

Das erfindungsgemäße Kontrollsystem gewährleistet nicht nur die Ausführung einer ersten Funktion bei einem fehlerhaften ersten Steuergerät oder die Ausführung einer zweiten Funktion bei einem fehlerhaften zweiten Steuergerät, zumindest in einem Notbetrieb der jeweiligen Funktion, sondern ermöglicht auch die Ausführung der ersten und der zweiten Funktion, zumindest in einem Notbetrieb, bei gleichzeitig fehlerhaftem ersten und fehlerhaften zweiten Steuergerät.

Beispielsweise ist es denkbar, dass in einem Normalbetrieb des Kontrollsystems mittels des dritten Steuergeräts und des ersten Steuergeräts gemeinschaftlich die erste Funktion und mittels des dritten Steuergeräts und des zweiten Steuergeräts gemeinschaftlich die zweite Funktion des Kraftfahrzeugs kontrollierbar sind. Entsprechend würde das dritte Steuergerät nicht nur in einem Fehlerbetrieb des Kontrollsystems, bei dem das erste und/oder zweite Steuergerät nicht ordnungsgemäß funktionieren/funktioniert, auch in dem Normalbetrieb des Kontrollsystems, bei dem alle drei Steuergeräte ordnungsgemäß funktionieren, zur Ausführung der ersten und der zweiten Funktion des Kraftfahrzeugs eingesetzt.

Die Formulierungen gemäß der Kennzeichen der Ansprüche 1 und 7, wonach das erste und das zweite Steuergerät jeweils mit dem dritten Steuergerät signalübertragend verbunden sind, sind allgemein auszulegen. Anstelle direkter signalübertragender Verbindungen sind auch indirekte signalübertragende Verbindungen denkbar.

Beispielsweise wäre unter einer indirekten signalübertragenden Verbindung auch zu verstehen, dass beispielsweise das erste und/oder zweite Steuergerät im jeweiligen Fehlerfall eine Fehlermeldung mittels einer signalübertragenden Verbindung an ein übergeordnetes Steuergerät weiterleitet und das übergeordnete Steuergerät dann ein entsprechendes Ausgangssignal erzeugt und dieses an das dritte Steuergerät übermittelt. Somit führt das Ausgangssignal des übergeordneten Steuergeräts zu einer Konfiguration des dritten Steuergeräts derart, dass allein mittels des dritten Steuergeräts die zu dem fehlerhaften Steuergerät korrespondierende Funktion des Kraftfahrzeugs kontrollierbar ist. Entsprechendes gilt für das erfindungsgemäße Verfahren, wonach das dritte Steuergerät in Abhängigkeit des Ausgangssignals des übergeordneten Steuergeräts die zu dem fehlerhaften Steuergerät korrespondierende Funktion des Kraftfahrzeugs allein kontrolliert. Bei dem übergeordneten Steuergerät kann es sich beispielsweise um ein Zentralsteuergerät handeln.

Der Begriff "Steuergerät" ist erfindungsgemäß allgemein zu verstehen und bezeichnet jede Art eines elektrischen oder elektronischen Geräts zur automatischen Kontrolle einer Funktion eines Kraftfahrzeugs.

Eine besonders vorteilhafte Weiterbildung des erfindungsgemäßen Kontrollsystems sieht vor, dass in Abhängigkeit des Eingangs eines Fehlersignals des dritten Steuergeräts bei dem ersten und dem zweiten Steuergerät das erste und das zweite Steuergerät derart konfigurierbar sind, dass die erste Funktion des Kraftfahrzeugs allein mittels des ersten Steuergeräts und die zweite Funktion des Kraftfahrzeugs allein mittels des zweiten Steuergeräts kontrollierbar ist. Auf diese Weise ist gewährleistet, dass die erste und die zweite Funktion des Kraftfahrzeugs, die zu dem ersten Steuergerät und dem fehlerhaften dritten Steuergerät sowie zu dem zweiten Steuergerät und dem fehlerhaften dritten Steuergerät korrespondieren, weiterhin, zumindest in einer Art Notbetrieb, ausführbar sind.

Analoges gilt für eine besonders vorteilhafte Weiterbildung des erfindungsgemäßen Verfahrens, wonach in Abhängigkeit des Eingangs eines Fehlersignals des dritten Steuergeräts bei dem ersten und dem zweiten Steuergerät das erste und das zweite Steuergerät derart konfiguriert werden, dass die erste Funktion des Kraftfahrzeugs allein mittels des ersten Steuergeräts und die zweite Funktion des Kraftfahrzeugs allein mittels des zweiten Steuergeräts kontrolliert werden.

Eine weitere vorteilhafte Weiterbildung des erfindungsgemäßen Kontrollsystems sieht vor, dass das Kontrollsystem mindestens einen Aktor mit einem Elektromotor zur Ausführung der ersten oder der zweiten Funktion des Kraftfahrzeugs aufweist, wobei mindestens eine erste Wicklung des Elektromotors mittels des ersten oder des zweiten Steuergeräts und mindestens eine zweite Wicklung des Elektromotors mittels des dritten Steuergeräts ansteuerbar ist, und wobei die zweite Wicklung des Elektromotors derart ausgebildet ist, dass die zweite Wicklung in einem Fehlerbetrieb des Kontrollsystems mit einer zweiten elektrischen Leistung ansteuerbar ist, wobei die zweite elektrische Leistung höher als eine erste elektrische Leistung ist, mit der die zweite Wicklung in einem Normalbetrieb des Kontrollsystems ansteuerbar ist. Hierdurch ist ermöglicht, dass die erste oder die zweite Funktion, zu der der Aktor mit dem Elektromotor korrespondiert, auch in dem Fehlerbetrieb des Kontrollsystems, in dem das erste oder das zweite Steuergerät nicht ordnungsgemäß funktioniert, mit einer höheren Wirksamkeit ausführbar ist, als mittels der Ansteuerung des Elektromotors durch das dritte Steuergerät in dem Normalbetrieb des Kontrollsystems vorgesehen ist. Analoges gilt für eine weitere vorteilhafte Weiterbildung des erfindungsgemäßen Verfahrens, wonach das Kontrollsystem mindestens einen Aktor mit einem Elektromotor zur Ausführung der ersten oder der zweiten Funktion des Kraftfahrzeugs aufweist, wobei mindestens eine erste Wicklung des Elektromotors mittels des ersten oder des zweiten Steuergeräts und mindestens eine zweite Wicklung des Elektromotors mittels des dritten Steuergeräts angesteuert werden, und wobei die zweite Wicklung des Elektromotors in einem Normalbetrieb des Kontrollsystems mit einer ersten elektrischen Leistung und in einem Fehlerbetrieb des Kontrollsystems, in dem das erste oder das zweite Steuergerät nicht ordnungsgemäß funktioniert, mit einer zweiten elektrischen Leistung angesteuert wird, wobei die zweite elektrische Leistung höher als die erste elektrische Leistung ist.

Grundsätzlich sind die erste und die zweite Funktion des Kraftfahrzeugs in weiten geeigneten Grenzen frei wählbar. Eine besonders vorteilhafte Weiterbildung des erfindungsgemäßen Kontrollsystems sieht jedoch vor, dass die erste Funktion des Kraftfahrzeugs als Bremsfunktion des Kraftfahrzeugs und die zweite Funktion des Kraftfahrzeugs als Lenkfunktion des Kraftfahrzeugs ausgebildet sind. Hierbei handelt es sich um zentrale und sicherheitsrelevante Funktionen des Kraftfahrzeugs, deren ordnungsgemäße Ausführung besonders bei hochautomatisierten oder autonomen Kraftfahrzeugen von entscheidender Bedeutung ist.

Analoges gilt für eine vorteilhafte Weiterbildung des erfindungsgemäßen Verfahrens, wonach die erste Funktion des Kraftfahrzeugs als Bremsfunktion des Kraftfahrzeugs und die zweite Funktion des Kraftfahrzeugs als Lenkfunktion des Kraftfahrzeugs ausgebildet sind.

Hochautomatisierte oder autonome Kraftfahrzeuge sind Kraftfahrzeuge, bei denen der Fahrzeugführer, wenn überhaupt, lediglich noch eine gewisse Kontrollaufgabe wahrnimmt. Hochautomatisierte oder autonome Kraftfahrzeuge sind also dazu konstruiert und eingerichtet, um im Wesentlichen unabhängig von dem Eingreifen eines Fahrzeugführers am Straßenverkehr teilzunehmen. Der Fahrzeugführer ist mehr ein Passagier als ein die Funktionen des Kraftfahrzeugs bestimmender Entscheider.

Jedoch ist der Begriff "autonom" weit auszulegen, so dass verschiedene Grade von autonomen Fahren und autonomen Kraftfahrzeugen davon umfasst sind. Beispielsweise sei hier ein situationsbedingtes autonomes Fahren und damit situationsbedingt autonom fahrende Kraftfahrzeuge genannt, bei denen je nach Verkehrssituation und/oder durchzuführendem Fahrmanöver ein autonomes Fahren erfolgt oder auch nicht. Entsprechend kann alternativ auch von automatisiertem Fahren und automatisierten Kraftfahrzeugen gesprochen werden.

Eine andere vorteilhafte Weiterbildung des erfindungsgemäßen Kontrollsystems sieht vor, dass das dritte Steuergerät mit dem ersten und/oder dem zweiten Steuergerät eine Baueinheit bildet. Auf diese Weise ist die Kompaktheit des Kontrollsystems weiter verbessert.

Anhand der beigefügten, grob schematischen Zeichnung wird die Erfindung nachfolgend näher erläutert. Dabei zeigt die einzige:

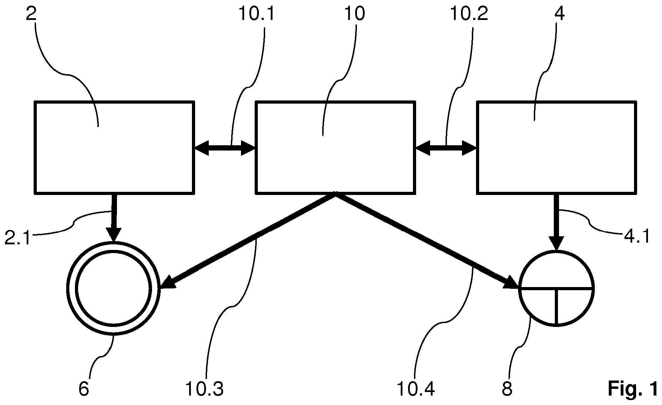

- Fig. 1: ein Ausführungsbeispiel eines erfindungsgemäßen Kontrollsystems für ein Kraftfahrzeug.

In der Fig. 1 ist ein Ausführungsbeispiel eines erfindungsgemäßen Kontrollsystems für ein Kraftfahrzeug exemplarisch gezeigt. Das Kontrollsystem weist ein erstes Steuergerät 2 für eine erste Funktion und ein zweites Steuergerät 4 für eine zweite Funktion eines nicht näher dargestellten Kraftfahrzeugs auf. Das Kraftfahrzeug ist dabei als ein autonomes Kraftfahrzeug ausgebildet, bei dem die Funktionen des Kraftfahrzeugs im Wesentlichen selbsttätig von dem Kraftfahrzeug ausgewählt und ausgeführt werden.

Die erste Funktion ist als Bremsfunktion und die zweite Funktion ist als Lenkfunktion des Kraftfahrzeugs ausgebildet. Entsprechend kontrolliert das erste Steuergerät 2 die Bremsfunktion des Kraftfahrzeugs und das zweite Steuergerät 4 die Lenkfunktion des Kraftfahrzeugs. Das erste Steuergerät 2 zur Kontrolle der Bremsfunktion des Kraftfahrzeugs ist in Signalübertragungsverbindung mit als Bremsen ausgebildeten ersten Aktoren 6 des Kraftfahrzeugs und das zweite Steuergerät 4 ist in Signalübertragungsverbindung mit einem als eine Lenkung ausgebildeten zweiten Aktor 8 des Kraftfahrzeugs.

Die jeweilige Signalübertragungsverbindung zwischen dem ersten Steuergerät 2 und den Bremsen 6 sowie dem zweiten Steuergerät 4 und der Lenkung 8 ist in der Fig. 1 anhand von durchgezogenen Pfeilen 2.1 und 4.1 symbolisiert. Bei den Bremsen 6 und der Lenkung 8 des Kraftfahrzeugs handelt es sich um sicherheitsrelevante und damit sehr wichtige Funktionen des Kraftfahrzeugs. Dies gilt im verstärkten Maße für das gewählte Ausführungsbeispiel, bei dem es sich ja um ein autonomes Kraftfahrzeug handelt.

Damit auch im Fehlerfall eines der Steuergeräte 2 und 4 die Bremsfunktion und die Lenkfunktion des Kraftfahrzeugs ordnungsgemäß und damit sicher ausgeführt werden können, weist das Kontrollsystem für das Kraftfahrzeug neben den beiden Steuergeräten 2 und 4 zusätzlich ein drittes Steuergerät 10 auf. Das dritte Steuergerät 10 ist zum einen in Signalübertragungsverbindung mit dem ersten und dem zweiten Steuergerät 2 und 4, was in der Fig. 1 durch die durchgezogenen Doppelpfeile 10.1 und 10.2 symbolisiert ist. Gleichzeitig ist das dritte Steuergerät 10 auch in Signalübertragungsverbindung mit den Bremsen 6 und der Lenkung 8. Dies ist durch die durchgezogenen Pfeile 10.3 und 10.4 symbolisiert.

Die Aktoren 6 und 8 weisen jeweils einen sechsphasigen, nicht dargestellten Elektromotor auf, wobei drei Phasen als erste Wicklungen und drei andere Phasen als zweite Wicklungen des jeweiligen Elektromotors ausgebildet sind. Die ersten Wicklungen der ersten Aktoren 6 sind mittels des ersten Steuergeräts 2 und die ersten Wicklungen des zweiten Aktors 8 sind mittels des zweiten Steuergeräts 4 ansteuerbar. Die zweiten Wicklungen der ersten Aktoren 6 und die zweiten Wicklungen des zweiten Aktors 8 sind jeweils mittels des dritten Steuergeräts 10 ansteuerbar. Die zweiten Wicklungen der Elektromotoren der Bremsen 6 sind derart ausgebildet, dass die zweiten Wicklungen dieser Elektromotoren in einem Fehlerbetrieb des Kontrollsystems, also beispielsweise bei einem fehlerhaften ersten Steuergerät 2, mit einer zweiten elektrischen Leistung ansteuerbar sind, wobei die zweite elektrische Leistung höher als eine erste elektrische Leistung ist, mit der die zweiten Wicklungen der Elektromotoren der Bremsen 6 in einem Normalbetrieb des Kontrollsystems ansteuerbar sind.

Im Nachfolgenden wird das erfindungsgemäße Verfahren bei dem vorliegenden Ausführungsbeispiel anhand der Fig. 1 näher erläutert.

Im Normalbetrieb des erfindungsgemäßen Kontrollsystems für das autonome Kraftfahrzeug werden die Bremsen 6 mittels des ersten Steuergeräts 2 für die Bremsfunktion des Kraftfahrzeugs sowie mittels des dritten Steuergeräts 10 und die Lenkung 8 mittels des zweiten Steuergeräts 4 für die Lenkfunktion des Kraftfahrzeugs sowie mittels des dritten Steuergeräts 10 kontrolliert. Somit erfolgt die Kontrolle der Bremsen 6 gemeinschaftlich mittels des ersten Steuergeräts 2 und des dritten Steuergeräts 10 und die Kontrolle der Lenkung 8 gemeinschaftlich mittels des zweiten Steuergeräts 4 und des dritten Steuergeräts 10. Hierzu werden in dem Normalbetrieb des Kontrollsystems, also für den Fall, wenn alle drei Steuergeräte 2, 4 und 10 ordnungsgemäß funktionieren, die ersten Wicklungen der Elektromotoren der Bremsen 6 mittels des ersten Steuergeräts 2 und die zweiten Wicklungen der Elektromotoren der Bremsen 6 mittels des dritten Steuergeräts 10 angesteuert. Analoges gilt für die Lenkfunktion, bei der die ersten Wicklungen des Elektromotors der Lenkung 8 mittels des zweiten Steuergeräts 4 und die zweiten Wicklungen des Elektromotors der Lenkung 8 mittels des dritten Steuergeräts 10 angesteuert werden.

Die Notwendigkeit eines Bremseingriffes durch das erste Steuergerät 2 und das dritte Steuergerät 10 oder eines Lenkeingriffes durch das zweite Steuergerät 4 und das dritte Steuergerät 10 wird in einem übergeordneten, nicht dargestellten Steuergerät auf dem Fachmann bekannte Weise anhand von an dem übergeordneten Steuergerät anliegenden Eingangssignalen von ebenfalls nicht dargestellten Sensoren des Kraftfahrzeugs entschieden.

Mittels der zwischen dem ersten Steuergerät 2 und dem dritten Steuergerät 10 sowie zwischen diesem und dem zweiten Steuergerät 4 existierenden Signalübertragungsverbindung 10.1 und 10.2 überwacht das Steuergerät 10 die ordnungsgemäße Funktion des ersten Steuergeräts 2 und des zweiten Steuergeräts 4. Zusätzlich oder alternativ dazu wäre es denkbar, dass diese Überwachung des ersten und des zweiten Steuergeräts 2, 4 in dem oben genannten übergeordneten Steuergerät erfolgt. Im Fehlerfall mindestens eines der beiden Steuergeräte 2 und 4 liegt an dem dritten Steuergerät 10 ein entsprechendes Fehlersignal von dem fehlerhaften Steuergerät 2 und/oder 4 als Eingangssignal an.

Sollte beispielsweise das erste Steuergerät 2 fehlerhaft arbeiten, so dass die Bremsfunktion des Kraftfahrzeugs nicht mehr in vollem Umfang ausgeführt wird, so wird dieser Fehler mittels der Signalübertragungsverbindung 10.1 an das dritte Steuergerät 10 gemeldet, woraufhin das dritte Steuergerät 10 derart konfiguriert wird, dass dieses die Bremsfunktion des Kraftfahrzeugs allein kontrolliert. Hierzu steht das dritte Steuergerät 10 mittels der Signalübertragungsverbindung 10.3 mit den Bremsen 6 des Kraftfahrzeugs in Signalaustausch. Die Bremsen 6 werden somit im Fehlerfall des ersten Steuergeräts 2 nicht mehr gemeinschaftlich von dem ersten Steuergerät 2 und dem dritten Steuergerät 10 kontrolliert, sondern allein von dem dritten Steuergerät 10.

Um beispielsweise gesetzliche Vorgaben oder dergleichen zu erfüllen, ist bei dem vorliegenden Ausführungsbeispiel vorgesehen, dass die zweiten Wicklungen der Elektromotoren der Bremsen 6 in einem Normalbetrieb des Kontrollsystems mit einer ersten elektrischen Leistung und in einem Fehlerbetrieb des Kontrollsystems, nämlich bei einem fehlerhaften ersten Steuergerät 2, mit einer zweiten elektrischen Leistung angesteuert werden, wobei die zweite elektrische Leistung höher als die erste elektrische Leistung ist. In dem vorliegenden Ausführungsbeispiel werden die ersten Wicklungen und die zweiten Wicklungen der Elektromotoren der Bremsen 6 in dem Normalbetrieb des Kontrollsystems mit jeweils 50% der Nominalleistung des jeweiligen Elektromotors angesteuert, so dass sich in dem Normalbetrieb für die Bremsen 6 100% der Nominalleistung des jeweiligen Elektromotors ergeben. In einem Fehlerbetrieb des Kontrollsystems, nämlich bei einem fehlerhaften ersten Steuergerät 2, werden die zweiten Wicklungen der Elektromotoren der Bremsen 6 jeweils mit Volllast, nämlich mit 70% der Nominalleistung des jeweiligen Elektromotors, angesteuert, so dass sich in dem Fehlerbetrieb für die Bremsen 6 70% der Nominalleistung des jeweiligen Elektromotors ergeben.

In dem Normalbetrieb des erfindungsgemäßen Kontrollsystems gemäß dem vorliegenden Ausführungsbeispiel werden die zweiten Wicklungen der Elektromotoren der Bremsen 6 somit lediglich mit einer Teillast belastet. Lediglich in dem oben erläuterten Fehlerbetrieb des Kontrollsystems werden die zweiten Wicklungen der Elektromotoren der Bremsen 6 mit der jeweiligen Volllast belastet. Entsprechend ist die Lebensdauer der mittels des dritten Steuergeräts 10 angesteuerten zweiten Wicklungen der Elektromotoren der Bremsen 6 und damit die Lebensdauer der Bremsen 6 erhöht.

Ähnliches gilt, falls das zweite Steuergerät 4 fehlerhaft arbeitet. In diesem Fall erhält das dritte Steuergerät 10 mittels der Signalübertragungsverbindung 10.2 eine entsprechende Fehlermeldung bezüglich des zweiten Steuergeräts 4, woraufhin das dritte Steuergerät 10 derart konfiguriert wird, dass dieses die Lenkfunktion des Kraftfahrzeugs allein kontrolliert. Die Lenkung 8 wird somit nicht mehr gemeinschaftlich von dem fehlerhaften zweiten Steuergerät 4 und dem dritten Steuergerät 10, sondern allein von dem dritten Steuergerät 10 kontrolliert, und zwar mittels der Signalübertragungsverbindung 10.4.

Das erfindungsgemäße Kontrollsystem gemäß dem vorliegenden Ausführungsbeispiel gewährleistet nicht nur die Ausführung der ersten Funktion bei fehlerhaftem ersten Steuergerät 2 oder die Ausführung der zweiten Funktion bei fehlerhaftem zweiten Steuergerät 4, zumindest in einem Notbetrieb der jeweiligen Funktion, sondern ermöglicht auch die Ausführung der ersten und der zweiten Funktion, zumindest in einem Notbetrieb, bei gleichzeitig fehlerhaftem ersten und fehlerhaftem zweiten Steuergerät 2,4.

Bei dem vorliegenden Ausführungsbeispiel ist darüber hinaus vorgesehen, dass in Abhängigkeit des Eingangs eines Fehlersignals des dritten Steuergeräts 10 bei dem ersten und dem zweiten Steuergerät 2, 4 das erste und das zweite Steuergerät 2, 4 derart konfigurierbar sind, dass die Bremsfunktion des Kraftfahrzeugs allein mittels des ersten Steuergeräts 2 und die Lenkfunktion des Kraftfahrzeugs allein mittels des zweiten Steuergeräts 4 kontrollierbar ist. Entsprechend würden in Abhängigkeit des Eingangs eines Fehlersignals des dritten Steuergeräts 10 bei dem ersten und dem zweiten Steuergerät 2, 4 das erste und das zweite Steuergerät 2, 4 derart konfiguriert werden, dass die Bremsfunktion des Kraftfahrzeugs allein mittels des ersten Steuergeräts 2 und die Lenkfunktion des Kraftfahrzeugs allein mittels des zweiten Steuergeräts 4 kontrolliert werden.

In einem Fehlerbetrieb des Kontrollsystems, nämlich wenn das dritte Steuergerät 10 nicht ordnungsgemäß funktioniert, werden somit lediglich die ersten Wicklungen der Elektromotoren der Bremsen 6 mittels des ersten Steuergeräts 2 und die ersten Wicklungen des Elektromotors der Lenkung 8 mittels des zweiten Steuergeräts 4 angesteuert.

Die Erfindung ist nicht auf das vorliegende Ausführungsbeispiel begrenzt. Beispielsweise ist es denkbar, dass das dritte Steuergerät mit dem ersten und/oder dem zweiten Steuergerät eine Baueinheit bildet. Auf diese Weise ist die Kompaktheit des erfindungsgemäßen Kontrollsystems verbessert. Dies ist beispielsweise möglich, wenn die jeweiligen Steuergeräte in deren Einbaulage nahe beieinander, beispielsweise in einem Motorraum des Kraftfahrzeugs, angeordnet sind.

Darüber hinaus sind die erste und die zweite Funktion des Kraftfahrzeugs nicht auf die Bremsfunktion und die Lenkfunktion des Kraftfahrzeugs beschränkt.

Bei einer Verwendung von mindestens einem Aktor mit einem Elektromotor ist die Ausführung der mindestens einen ersten und der mindestens einen zweiten Wicklung dieses Elektromotors nach Anzahl, Anordnung, Form, Dimension und Ansteuerung in weiten geeigneten Grenzen frei wählbar. Entsprechend ist die Ausbildung der einzelnen Wicklungen dieses Elektromotors sowie dessen Ansteuerung in einem Normalbetrieb und einem Fehlerbetrieb eines erfindungsgemäßen Kontrollsystems nicht auf das oben erläuterte Ausführungsbeispiel begrenzt.

Ferner betrifft die Erfindung ein Kraftfahrzeug, umfassend ein erfindungsgemäßes Kontrollsystem, ein Computerprogrammprodukt, umfassend Befehle, die bewirken, dass das erfindungsgemäße Kontrollsystem, beispielsweise nach dem vorliegenden Ausführungsbeispiel, die Verfahrensschritte des erfindungsgemäßen Verfahrens, beispielsweise nach dem vorliegenden Ausführungsbeispiel, ausführt, sowie ein computerlesbares Medium, auf dem das erfindungsgemäße Computerprogrammprodukt gespeichert ist.

### Bezugszeichenliste

- 2: Erstes Steuergerät, zur Kontrolle der Bremsfunktion ausgebildet
- 2.1: Signalübertragungsverbindung zwischen dem ersten Steuergerät 2 und den Bremsen 6
- 4: Zweites Steuergerät, zur Kontrolle der Lenkfunktion ausgebildet
- 4.1: Signalübertragungsverbindung zwischen dem zweiten Steuergerät 4 und der Lenkung 8
- 6: Erste Aktoren, als Bremsen ausgebildet
- 8: Zweiter Aktor, als Lenkung ausgebildet
- 10: Drittes Steuergerät zur Kontrolle der Bremsfunktion und der Lenkfunktion ausgebildet
- 10.1: Signalübertragungsverbindung zwischen dem ersten Steuergerät 2 und dem dritten Steuergerät 10
- 10.2: Signalübertragungsverbindung zwischen dem zweiten Steuergerät 4 und dem dritten Steuergerät 10
- 10.3: Signalübertragungsverbindung zwischen dem dritten Steuergerät 10 und den Bremsen 6
- 10.4: Signalübertragungsverbindung zwischen dem dritten Steuergerät 10 und der Lenkung 8

## Patentansprüche

1. Kontrollsystem für ein Kraftfahrzeug, mit einem ersten Steuergerät (2) zur Kontrolle einer ersten Funktion des Kraftfahrzeugs und einem zweiten Steuergerät (4) zur Kontrolle einer zweiten Funktion des Kraftfahrzeugs, wobei das erste und das zweite Steuergerät (2, 4) jeweils mit mindestens einem Sensor und/oder mindestens einem Aktor (6, 8) zur Ausführung der jeweiligen Funktion des Kraftfahrzeugs signalübertragend verbunden sind, **dadurch gekennzeichnet,**
**dass** das Kontrollsystem ein drittes Steuergerät (10) zur Kontrolle der ersten Funktion und der zweiten Funktion des Kraftfahrzeugs aufweist, das mit dem ersten und dem zweiten Steuergerät (2, 4) sowie mit den jeweils zu dem ersten und dem zweiten Steuergerät (2, 4) korrespondierenden mindestens einen Sensor und/oder mindestens einen Aktor (6, 8) zur Ausführung der jeweiligen Funktion des Kraftfahrzeugs signalübertragend verbunden ist und in Abhängigkeit des Eingangs eines Fehlersignals des ersten und/oder des zweiten Steuergeräts (2, 4) bei dem dritten Steuergerät (10) das dritte Steuergerät (10) derart konfigurierbar ist, dass die zu dem fehlerhaften Steuergerät (2, 4) korrespondierende erste und/oder zweite Funktion des Kraftfahrzeugs allein mittels des dritten Steuergeräts (10) kontrollierbar ist.

2. Kontrollsystem nach Anspruch 1,
**dadurch gekennzeichnet,**
**dass** in Abhängigkeit des Eingangs eines Fehlersignals des dritten Steuergeräts (10) bei dem ersten und dem zweiten Steuergerät (2, 4) das erste und das zweite Steuergerät (2, 4) derart konfigurierbar sind, dass die erste Funktion des Kraftfahrzeugs allein mittels des ersten Steuergeräts (2) und die zweite Funktion des Kraftfahrzeugs allein mittels des zweiten Steuergeräts (4) kontrollierbar ist.

3. Kontrollsystem nach Anspruch 1 oder 2,
**dadurch gekennzeichnet,**
**dass** das Kontrollsystem mindestens einen Aktor (6, 8) mit einem Elektromotor zur Ausführung der ersten oder der zweiten Funktion des Kraftfahrzeugs aufweist, wobei mindestens eine erste Wicklung des Elektromotors mittels des ersten oder des zweiten Steuergeräts (2, 4) und mindestens eine zweite Wicklung des Elektromotors mittels des dritten Steuergeräts (10) ansteuerbar ist, und wobei die zweite Wicklung des Elektromotors derart ausgebildet ist, dass die zweite Wicklung in einem Fehlerbetrieb des Kontrollsystems mit einer zweiten elektrischen Leistung ansteuerbar ist, wobei die zweite elektrische Leistung höher als eine erste elektrische Leistung ist, mit der die zweite Wicklung in einem Normalbetrieb des Kontrollsystems ansteuerbar ist.

4. Kontrollsystem nach einem der Ansprüche 1 bis 3,
**dadurch gekennzeichnet,**
**dass** die erste Funktion des Kraftfahrzeugs als Bremsfunktion und die zweite Funktion des Kraftfahrzeugs als Lenkfunktion ausgebildet sind.

5. Kontrollsystem nach einem der Ansprüche 1 bis 4,
**dadurch gekennzeichnet,**
**dass** das dritte Steuergerät mit dem ersten und/oder dem zweiten Steuergerät eine Baueinheit bildet.

6. Kraftfahrzeug, umfassend ein Kontrollsystem mit einem ersten Steuergerät (2) zur Kontrolle einer ersten Funktion des Kraftfahrzeugs und einem zweiten Steuergerät (4) zur Kontrolle einer zweiten Funktion des Kraftfahrzeugs, wobei das erste und das zweite Steuergerät (2, 4) jeweils mit mindestens einem Sensor und/oder mindestens einem Aktor (6, 8) zur Ausführung der jeweiligen Funktion des Kraftfahrzeugs signalübertragend verbunden sind,
**dadurch gekennzeichnet,**
**dass** das Kontrollsystem nach einem der Ansprüche 1 bis 5 ausgebildet ist.

7. Verfahren zur Kontrolle eines Kraftfahrzeugs, wobei das Kraftfahrzeug ein erstes Steuergerät (2) zur Kontrolle einer ersten Funktion des Kraftfahrzeugs und ein zweites Steuergerät (4) zur Kontrolle einer zweiten Funktion des Kraftfahrzeugs aufweist, und wobei das erste und das zweite Steuergerät (2, 4) jeweils mit mindestens einem Sensor und/oder mindestens einem Aktor (6, 8) zur Ausführung der jeweiligen Funktion des Kraftfahrzeugs signalübertragend verbunden sind,
**dadurch gekennzeichnet,**
**dass** das Kontrollsystem ein drittes Steuergerät (10) zur Kontrolle der ersten Funktion und der zweiten Funktion des Kraftfahrzeugs aufweist, das mit dem ersten und dem zweiten Steuergerät (2, 4) sowie mit den jeweils zu dem ersten und dem zweiten Steuergerät (2, 4) korrespondierenden mindestens einen Sensor und/oder mindestens einen Aktor (6, 8) zur Ausführung der jeweiligen Funktion des Kraftfahrzeugs signalübertragend verbunden ist und in Abhängigkeit des Eingangs eines Fehlersignals des ersten und/oder des zweiten Steuergeräts (2, 4) bei dem dritten Steuergerät (10) das dritte Steuergerät (10) derart konfiguriert wird, dass die zu dem fehlerhaften Steuergerät (2, 4) korrespondierende erste und/oder zweite Funktion des Kraftfahrzeugs allein mittels des dritten Steuergeräts (10) kontrolliert wird.

8. Verfahren nach Anspruch 7,
**dadurch gekennzeichnet,**
**dass** in Abhängigkeit des Eingangs eines Fehlersignals des dritten Steuergeräts (10) bei dem ersten und dem zweiten Steuergerät (2, 4) das erste und das zweite Steuergerät (2, 4) derart konfiguriert werden, dass die erste Funktion des Kraftfahrzeugs allein mittels des ersten Steuergeräts (2) und die zweite Funktion des Kraftfahrzeugs allein mittels des zweiten Steuergeräts (4) kontrolliert werden.

9. Verfahren nach Anspruch 7 oder 8,
**dadurch gekennzeichnet,**
**dass** die erste Funktion des Kraftfahrzeugs als Bremsfunktion und die zweite Funktion des Kraftfahrzeugs als Lenkfunktion ausgebildet sind.

10. Verfahren nach einem der Ansprüche 7 bis 9,
**dadurch gekennzeichnet,**
**dass** das Kontrollsystem mindestens einen Aktor (6, 8) mit einem Elektromotor zur Ausführung der ersten oder der zweiten Funktion des Kraftfahrzeugs aufweist, wobei mindestens eine erste Wicklung des Elektromotors mittels des ersten oder des zweiten Steuergeräts (2, 4) und mindestens eine zweite Wicklung des Elektromotors mittels des dritten Steuergeräts (10) angesteuert werden, und wobei die zweite Wicklung des Elektromotors in einem Normalbetrieb des Kontrollsystems mit einer ersten elektrischen Leistung und in einem Fehlerbetrieb des Kontrollsystems mit einer zweiten elektrischen Leistung angesteuert wird, wobei die zweite elektrische Leistung höher als die erste elektrische Leistung ist.

11. Computerprogrammprodukt, umfassend Befehle, die bewirken, dass das Kontrollsystem nach einem der Ansprüche 1 bis 5 die Verfahrensschritte des Verfahrens nach einem der Ansprüche 7 bis 10 ausführt.

12. Computerlesbares Medium, auf dem das Computerprogrammprodukt nach Anspruch 11 gespeichert ist.

## Claims

1. Control system for a motor vehicle, having a first controller (2) for controlling a first function of the motor vehicle and a second controller (4) for controlling a second function of the motor vehicle, wherein the first and the second controller (2, 4) are each connected in terms of signal transmission to at least one sensor and/or at least one actuator (6, 8) in order to carry out the respective function of the motor vehicle,
**characterized in that**
the control system has a third controller (10) for controlling the first function and the second function of the motor vehicle, which third controller is connected in terms of signal transmission to the first and the second controller (2, 4) and to the at least one sensor and/or at least one actuator (6, 8), corresponding in each case to the first and the second controller (2, 4), in order to carry out the respective function of the motor vehicle, and the third controller (10) is configurable on the basis of the arrival of a fault signal from the first and/or the second controller (2, 4) at the third controller (10), such that the first and/or second function of the motor vehicle, corresponding to the faulty controller (2, 4) is controllable solely by way of the third controller (10).

2. Control system according to claim 1,
**characterized in that**
the first and the second controller (2, 4) are configurable on the basis of the arrival of a fault signal from the third controller (10) at the first and the second controller (2, 4), such that the first function of the motor vehicle is controllable solely by way of the first controller (2) and the second function of the motor vehicle is controllable solely by way of the second controller (4).

3. Control system according to claim 1 or 2,
**characterized in that**
the control system has at least one actuator (6, 8) having an electric motor for carrying out the first or the second function of the motor vehicle, wherein at least one first winding of the electric motor is able to be actuated by way of the first or the second controller (2, 4) and at least one second winding of the electric motor is able to be actuated by way of the third controller (10), and wherein the second winding of the electric motor is designed such that the second winding is able to be actuated with a second electric power in a fault mode of the control system, wherein the second electric power is higher than a first electric power by way of which the second winding is able to be actuated in a normal mode of the control system.

4. Control system according to one of claims 1 to 3,
**characterized in that**
the first function of the motor vehicle is designed as a braking function and the second function of the motor vehicle is designed as a steering function.

5. Control system according to one of claims 1 to 4,
**characterized in that**
the third controller forms a structural unit with the first and/or the second controller.

6. Motor vehicle, comprising a control system having a first controller (2) for controlling a first function of the motor vehicle and a second controller (4) for controlling a second function of the motor vehicle, wherein the first and the second controller (2, 4) are each connected in terms of signal transmission to at least one sensor and/or at least one actuator (6, 8) in order to carry out the respective function of the motor vehicle,
**characterized in that**
the control system is designed in accordance with one of claims 1 to 5.

7. Method for controlling a motor vehicle, wherein the motor vehicle has a first controller (2) for controlling a first function of the motor vehicle and a second controller (4) for controlling a second function of the motor vehicle, and wherein the first and the second controller (2, 4) are each connected in terms of signal transmission to at least one sensor and/or at least one actuator (6, 8) in order to carry out the respective function of the motor vehicle,
**characterized in that**
the control system has a third controller (10) for controlling the first function and the second function of the motor vehicle, which third controller is connected in terms of signal transmission to the first and the second controller (2, 4) and to the at least one sensor and/or the at least one actuator (6, 8), corresponding in each case to the first and the second controller (2, 4), in order to carry out the respective function of the motor vehicle, and the third controller (10) is configured on the basis of the arrival of a fault signal from the first and/or the second controller (2, 4) at the third controller (10), such that the first and/or second function of the motor vehicle corresponding to the faulty controller (2, 4), is controlled solely by way of the third controller (10).

8. Method according to claim 7,
**characterized in that**
the first and the second controller (2, 4) are configured on the basis of the arrival of a fault signal from the third controller (10) at the first and the second controller (2, 4), such that the first function of the motor vehicle is controlled solely by way of the first controller (2) and the second function of the motor vehicle is controlled solely by way of the second controller (4).

9. Method according to claim 7 or 8,
**characterized in that**
the first function of the motor vehicle is designed as a braking function and the second function of the motor vehicle is designed as a steering function.

10. Method according to one of claims 7 to 9,
**characterized in that**
the control system has at least one actuator (6, 8) having an electric motor for carrying out the first or the second function of the motor vehicle, wherein at least one first winding of the electric motor is actuated by way of the first or the second controller (2, 4) and at least one second winding of the electric motor is actuated by way of the third controller (10), and wherein the second winding of the electric motor is actuated with a first electric power in a normal mode of the control system and with a second electric power in a fault mode of the control system, wherein the second electric power is higher than the first electric power.

11. Computer program product comprising commands that cause the control system according to one of claims 1 to 5 to carry out the method steps of the method according to one of claims 7 to 10.

12. Computer-readable medium on which the computer program product according to claim 11 is stored.

## Revendications

1. Système de commande pour un véhicule automobile, comprenant un premier appareil de commande (2) pour commander une première fonction du véhicule automobile et un deuxième appareil de commande (4) pour commander une deuxième fonction du véhicule automobile, le premier et le deuxième appareil de commande (2, 4) étant respectivement reliés pour la transmission de signaux à au moins un capteur et/ou à au moins un actionneur (6, 8) pour effectuer la fonction respective du véhicule automobile,
**caractérisé en ce que**
le système de commande présente un troisième appareil de commande (10) pour commander la première fonction et la deuxième fonction du véhicule automobile et qui est relié pour la transmission de signaux au premier et au deuxième appareil de commande (2, 4) ainsi qu'audit au moins un capteur et/ou audit au moins un actionneur (6, 8) correspondant respectivement au premier et au deuxième appareil de commande (2, 4) pour effectuer la fonction respective du véhicule automobile, et en fonction de l'arrivée d'un signal de défaut au troisième appareil de commande (10) en provenance du premier et/ou du deuxième appareil de commande (2, 4), le troisième appareil de commande (10) peut être configuré de telle sorte que la première et/ou la deuxième fonction du véhicule automobile correspondant à l'appareil de commande défectueux (2, 4) peut être commandée uniquement au moyen du troisième appareil de commande (10).

2. Système de commande selon la revendication 1, **caractérisé en ce qu'**en fonction de l'arrivée d'un signal de défaut au premier et au deuxième appareil de commande (2, 4) en provenance du troisième appareil de commande (10), le premier et le deuxième appareil de commande (2, 4) peuvent être configurés de telle sorte que la première fonction du véhicule automobile peut être commandée uniquement au moyen du premier appareil de commande (2) et la deuxième fonction du véhicule automobile peut être commandée uniquement au moyen du deuxième appareil de commande (4).

3. Système de commande selon la revendication 1 ou 2, **caractérisé en ce que** le système de commande présente au moins un actionneur (6, 8) doté d'un moteur électrique pour effectuer la première ou la deuxième fonction du véhicule automobile, au moins un premier enroulement du moteur électrique pouvant être piloté au moyen du premier ou du deuxième appareil de commande (2, 4) et au moins un deuxième enroulement du moteur électrique pouvant être piloté au moyen du troisième appareil de commande (10), et le deuxième enroulement du moteur électrique étant réalisé de telle sorte qu'en cas de fonctionnement défectueux du système de commande, le deuxième enroulement peut être piloté avec une deuxième puissance électrique, la deuxième puissance électrique étant supérieure à une première puissance électrique avec laquelle le deuxième enroulement peut être piloté en cas de fonctionnement normal du système de commande.

4. Système de commande selon l'une quelconque des revendications 1 à 3, **caractérisé en ce que** la première fonction du véhicule automobile est réalisée sous forme de fonction de freinage, et la deuxième fonction du véhicule automobile est réalisée sous forme de fonction de direction.

5. Système de commande selon l'une quelconque des revendications 1 à 4, **caractérisé en ce que** le troisième appareil de commande constitue une unité modulaire avec le premier et/ou le deuxième appareil de commande.

6. Véhicule automobile, comprenant un système de commande doté d'un premier appareil de commande (2) pour commander une première fonction du véhicule automobile et d'un deuxième appareil de commande (4) pour commander une deuxième fonction du véhicule automobile, le premier et le deuxième appareil de commande (2, 4) étant respectivement reliés pour la transmission de signaux à au moins un capteur et/ou à au moins un actionneur (6, 8) pour effectuer la fonction respective du véhicule automobile, **caractérisé en ce que** le système de commande est réalisé selon l'une quelconque des revendications 1 à 5.

7. Procédé de commande d'un véhicule automobile, dans lequel le véhicule automobile présente un premier appareil de commande (2) pour commander une première fonction du véhicule automobile et un deuxième appareil de commande (4) pour commander une deuxième fonction du véhicule automobile, et le premier et le deuxième appareil de commande (2, 4) étant respectivement reliés pour la transmission de signaux à au moins un capteur et/ou à au moins un actionneur (6, 8) pour effectuer la fonction respective du véhicule automobile,
**caractérisé en ce que**
le système de commande présente un troisième appareil de commande (10) pour commander la première fonction et la deuxième fonction du véhicule automobile et qui est relié pour la transmission de signaux au premier et au deuxième appareil de commande (2, 4) ainsi qu'audit au moins un capteur et/ou audit au moins un actionneur (6, 8) correspondant respectivement au premier et au deuxième appareil de commande (2, 4) pour effectuer la fonction respective du véhicule automobile, et en fonction de l'arrivée d'un signal de défaut au troisième appareil de commande (10) en provenance du premier et/ou du deuxième appareil de commande (2, 4), le troisième appareil de commande (10) est configuré de telle sorte que la première et/ou la deuxième fonction du véhicule automobile correspondant à l'appareil de commande défectueux (2, 4) est commandée uniquement au moyen du troisième appareil de commande (10).

8. Procédé selon la revendication 7, **caractérisé en ce qu'**en fonction de l'arrivée d'un signal de défaut au premier et au deuxième appareil de commande (2, 4) en provenance du troisième appareil de commande (10), le premier et le deuxième appareil de commande (2, 4) sont configurés de telle sorte que la première fonction du véhicule automobile est commandée uniquement au moyen du premier appareil de commande (2) et la deuxième fonction du véhicule automobile est commandée uniquement au moyen du deuxième appareil de commande (4).

9. Procédé selon la revendication 7 ou 8, **caractérisé en ce que** la première fonction du véhicule automobile est réalisée sous forme de fonction de freinage et la deuxième fonction du véhicule automobile est réalisée sous forme de fonction de direction.

10. Procédé selon l'une quelconque des revendications 7 à 9, **caractérisé en ce que** le système de commande présente au moins un actionneur (6, 8) doté d'un moteur électrique pour effectuer la première ou la deuxième fonction du véhicule automobile, au moins un premier enroulement du moteur électrique étant piloté au moyen du premier ou du deuxième appareil de commande (2, 4) et au moins un deuxième enroulement du moteur électrique étant piloté au moyen du troisième appareil de commande (10), et en cas de fonctionnement normal du système de commande, le deuxième enroulement du moteur électrique est piloté avec une première puissance électrique, et en cas de fonctionnement défectueux du système de commande, il est piloté avec une deuxième puissance électrique, la deuxième puissance électrique étant supérieure à la première puissance électrique.

11. Produit programme informatique, comprenant des instructions qui ont pour effet que le système de commande selon l'une quelconque des revendications 1 à 5 effectue les étapes de procédé du procédé selon l'une quelconque des revendications 7 à 10.

12. Support lisible par ordinateur sur lequel est enregistré le produit programme informatique selon la revendication 11.
